# EUROPÄISCHE PATENTANMELDUNG

(11) **EP 2 899 968 A1**
(43) Veröffentlichungstag der Anmeldung: **29.07.2015**
(21) Anmeldenummer: 15000181.6
(22) Anmeldetag: 22.01.2015
(51) Int. Cl.: H04N 7/10, H04N 17/00, H04H 20/12, H04H 20/78

(54) **Verfahren und Vorrichtung zur Erkennung von Lecks in Kabel-Fernsehsystemen**

(30) Priorität: 22.01.2014 ES 201400065
(71) Anmelder: Sistemas Integrados de Servicios de Telecontrol, S.L., 15706 Santiago de Compostela (ES)
(72) Erfinder: Laffon Lage, Guillermo, 15706 Santiago de Compostela (ES); Ledo Gavieiro, José Luis, 15706 Santiago de Compostela (ES); Ucha Cuevas, Miguel Angel, 15706 Santiago de Compostela (ES)
(74) Vertreter: Dosterschill, Peter

(57) **Zusammenfassung**

Die Erfindung betrifft ein Verfahren und eine Vorrichtung zur Erkennung von Lecks in Kabel-Fernsehsystemen, insbesondere in einem Frequenzband von 700 bis 900 MHz. Es werden K Punkte eines Frequenzbandes überprüft, die K Signalen von Frequenzen x^{k}, x^{j} , x^{k+1} in der Weise entsprechen, dass ihre SignalLeistungspegel Lₓ^{k}ₜ , Lₓ^{j}ₜ , Lₓ^{k+1}ₜ zu einem Zeitpunkt t die Relation Lₓ^{k}ₜ < Lₓ^{j}ₜ > Lₓ^{k+1}ₜ erfüllen. Den Signal-Leistungspegeln Lₓₗ werden signalleistungspegel-individuelle Farben Cₓₗ zugeordnet; Abweichungen gegenüber nicht-leck-bezogenen Werten werden als Lecks bewertet und ein Wasserfalldiagramm gebildet.

## Beschreibung

Die vorliegende Erfindung betrifft ein Verfahren und eine Vorrichtung zur Erkennung von Lecks in Kabel-Fernsehsystemen nach dem Oberbegriff des Anspruchs 1 beziehungswiese des Anspruchs 4.

Die vorliegende Erfindung betrifft den Bereich der Erkennung von Störungen, die von Kabelfernseh-Signalen auf LTE-Signale (Mobile Telefonie der vierten Generation) erfolgen.

Mit der Implementierung der der sogenannten Digitalen Dividende (siehe http://www.televisiondigital.es/DividendoDigital/Paginas/que-es-dividendo-digital.aspx und http://es.wikipedia.org/wiki/Dividendo Digital) und mit der Einführung neuer Mobiltelefondienste der vierten Generation (LTE) wird ein Teil des elektromagnetischen Spektrums, das früher die Signale des Digitalen Terrestrischen Fernsehens TDT ("Televisión Digital Terrestre") einnahm, nun den LTE-Diensten zugeordnet.

Eines der Frequenzbänder, die nun den LTE-Diensten zugeordnet ist, beträgt 791 bis 862 MHz. Ebenso wird in Ländern wie beispielsweise in den USA ein großer Teil dieses Bandes den Diensten zugeordnet, die mit "Public Safety" ("Öffentliche Sicherheit") bezeichnet werden. Hierzu gehören die Polizei, die Feuerwehr, Krankenwagen, Rettungsteams, oder jeder andere Dienst, der für die Sicherheit der Bürger eingesetzt werden kann. Diese Art von Diensten wird im LTE-Radiobereich angeboten, aber in Netzen, die nicht geschäftlich benutzt werden.

Eines der größten Probleme im Frequenzbereich von 791 bis 862 MHz sind die möglichen Störungen, die Kabelfernsehsysteme CATV im LTE-Netz generieren können, da die Digitaldividende diese Art von Netzen nicht betrifft. Obwohl die Systeme CATV hinsichtlich ihres physischen Mediums auf das Kabel eingeschränkt sind, verhindert dies nicht, dass Signallecks an verschiedenen Punkten des Netzes gebildet werden können, wobei die Lecks das Signal des LTE stören. Es gibt unterschiedliche Gründe dafür, dass CATV-Signallecks gebildet werden können, wie beispielsweise Verbindungsstecker in einem schlechten Zustand oder beschädigte beziehungsweise blanke Kabel.

Die Störung von LTE-Signalen kann den Verlust eines Dienstes oder dessen schlechte Qualität bewirken. Dies führt zu erheblichen, entscheidenden Problemen, zum Beispiel im Bereich "Öffentliche Sicherheit", wenn die Dienste ausfallen oder nur in schlechter Qualität ausgeführt werden können.

Zur Zeit bestehen unterschiedliche Verfahren zur Erkennung von Lecks in CATV-Systemen, die unter dem Namen "Egress" bekannt sind. Das Dokument "Evolving challenges in LTE/cable interference issues" (Rohde & Schwarz GmbH & Co. KG, PD 3606 85 14 62, Version 01.00, May 2013) beschreibt solche Verfahren.

Ein Verfahren nach dem Stand der Technik besteht darin, ein Breitband-Pilotsignal in die Kopfeinheit eines CATV-Systems einzuführen, und mit einem speziellen Messgerät zu versuchen, das Pilotsignal zu lokalisieren.
Üblicherweise wird das Pilotsignal zwischen die Kabelkanäle eingefügt, um nur die geringstmögliche Bandbreite in Anspruch zu nehmen. Dies führt dazu, dass die Empfangsqualität der Randkabelkanäle durch das Pilotsignal verschlechtert wird. Aus diesem Grund ist dieses invasive Verfahren nicht sehr erwünscht.

Bei einem weiteren Verfahren nach dem Stand der Technik wird versucht, eine Korrelation zwischen dem erhaltenen Signal und dem von einer Kopfeinheit eines CATV-Systems gesendeten Signal zu finden. Hierfür wird eine spezielle Vorrichtung benötigt, die das gesendete Signal kennt. Der Vorteil dieses Verfahrens besteht darin, dass eine vorgenannte Einfügung des Pilotsignals in die Kopfeinheit des CATV-Systems nicht erforderlich ist, allerdings ist dieses Verfahren außerordentlich komplex ausgestaltet.

Bekannte Verfahren haben den Nachteil, dass die Auswertung optisch dargestellter Werte Fachwissen beziehungsweise Erfahrung der jeweiligen Bedienperson erfordern.
Der Erfindung liegt die Aufgabe zugrunde, ein Verfahren und eine Vorrichtung der eingangs genannten Art zu schaffen, die einem Benutzer in anschaulicher Weise, insbesondere in optischer Weise, Lecks, deren Frequenzen und den Ort ihres Austritts aus einem System, anzeigt.

Diese Aufgabe wird durch ein Verfahren und eine Vorrichtung gelöst, die in den Patentansprüchen definiert sind.

Mit der Erfindung wird eine Vielzahl von Vorteilen erzielt.
Insbesondere ermöglichen das erfindungsgemäße Verfahren und die erfindungsgemäße Vorrichtung die Visualisierung des Signalspektrums und eines Lecks in einer allgemein verständlichen Weise, ohne dass besondere nachrichtentechnische Fachkenntnisse erforderlich sind.

Im Folgenden werden anhand der Figuren hinsichtlich der praktischen Realisierung nicht einschränkende Ausführungsbeispiele des erfindungsgemäßen Verfahrens und der erfindungsgemäßen Vorrichtung beschrieben.

Es zeigt:
- Figur 1: ein Wasserfall-Diagramm mit einem Signalleck,
- Figur 2a: eine Darstellung von Signalleistungspegeln für verschiedene Frequenzen, wobei kein Leck auftritt;
- Figur 2b: eine Darstellung von Signalleistungspegeln für verschiedene Frequenzen, wobei bei einem Digitalkanal ein Leck auftritt; und
- Figur 3: ein Blockdiagramm der Vorrichtung gemäß der Erfindung.

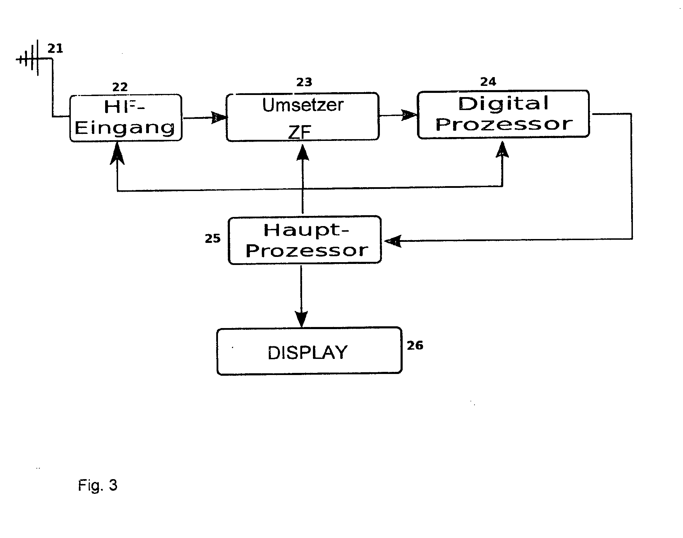

Die in Figur 3 dargestellte Vorrichtung zur Erkennung von Lecks in Kabel-Fernsehsystemen (CATV) ist insbesondere ein Feldmessgerät. Dieses besteht aus einer Richtantenne 21, einer Hochfrequenz-Eingangsschaltung 22, einem Umsetzer 23, der die über die Antenne 21 empfangenen Signale in eine Zwischenfrequenz umsetzt, einem ersten Prozessor 25, einem zweiten Prozessor 24 und einer optischen Anzeigeeinrichtung ("DISPLAY") 26. Insbesondere ist dem ersten Prozessor 25 ein Softwareprogramm zugeordnet ist, das das erfindungsgemäße Verfahren definiert, das im folgenden weiter beschrieben wird.

Die Hochfrequenz-Eingangsschaltung 22 passt das empfangene Eingangssignal mittels Verstärkung oder Dämpfung an und bildet das gewünschte Band mittels eines Bandpasses.
Dr Umsetzer 23 setzt das angepasste Signal auf eine feste Arbeitsfrequenz ZF auf beispielsweise 36 MHz um.

Der erste Prozessor 24 führt eine Fast Fourier Transformation (FFT) durch, um Spektralkurven zu erhalten und ermittelt für vorgegebene Frequenzen die zugehörigen Signal-Leistungspegel von N, insbesondere 1024 Punkten eines Frequenzbandes, insbesondere des Frequenzbandes von 700 bis 900 MHz, und der zweite Prozessor 25 identifiziert K, insbesondere 3 Punkte, für die die Relation Lₓ^{k}ₜ < Lₓ^{j}ₜ > Lₓ^{k+1}ₜ gilt. Der zweite Prozessor 25, dem das Softwareprogramm zugeordnet ist, das das erfindungsgemäße Verfahren definiert, führt die Rechnungen für jede einzelne Spektralkurve durch, er erkennt vorhandene Lecks und steuert auch die optische Anzeigeeinrichtung ("DISPLAY") 26 und/oder eine akustische Anzeigeeinrichtung zur optischen und/oder akustischen Anzeige, die ein Leck im Kabel-Fernsehsystem CATV bezeichnet.

Die Richtantenne 21 ist geräuscharm und weist einen vergleichsweise hohen Antennengewinn auf, der in der Größenordnung von 18 dB liegt.

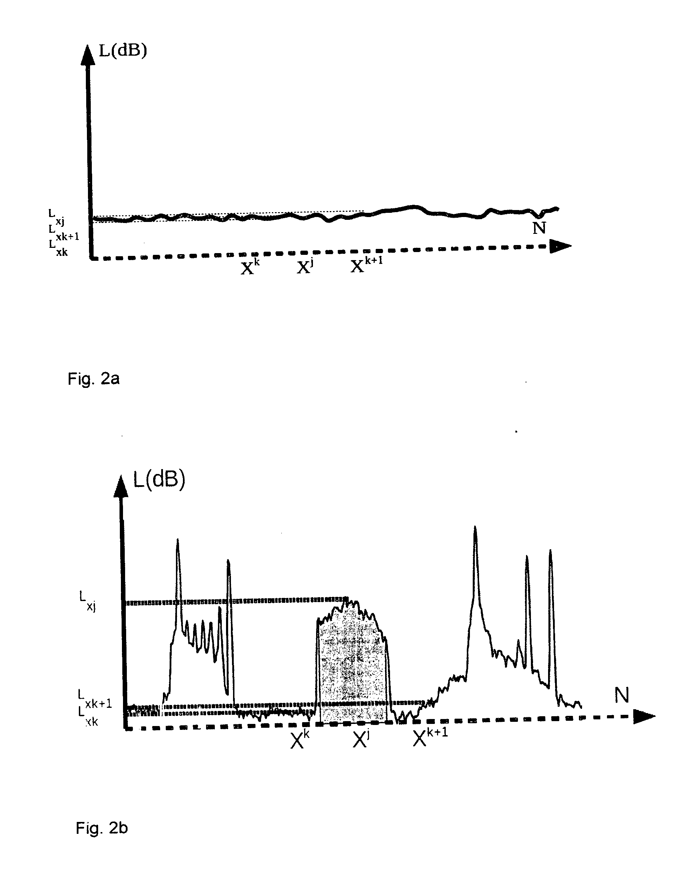

Lecks beziehungsweise Leckagen, die erfindungsgemäß erkannt werden, sind anhand der Gegenüberstellung der Figuren 2a und 2b erkennbar.

So zeigt Figur 2a für die Signale der Frequenzen x^{k}, x^{j}, x^{k+1} die Signal-Leistungspegel Lₓ^{k}ₜ, Lₓ^{j}ₜ, Lₓ^{k+1}ₜ zu einem Zeitpunkt t. Die Signal-Leistungspegel Lₓ^{k}ₜ , Lₓ^{j}ₜ, Lₓ^{k+1}ₜ sind in etwa gleich groß; Figur 2a zeigt eine Situation, die im ungestörten LTE-Bereich gegeben ist, ein Leck liegt nicht vor. Dabei gilt für jedes x^{j} die Relation x^{k} < x^{j} < x^{k+1}, wobei weiterhin die Signale der Frequenzen x^{k} und x^{k+1} einen Abstand bilden, der im Wesentlichen gleich der Bandbreite von Fernseh-Digitalkanälen ist, beispielsweise insbesondere im Wesentlichen 6, 7 oder 8 MHz, die in dem Kabel-Fernsehsystem CATV vorliegen.

Demgegenüber zeigt Figur 2b eine Situation, in der in einem Frequenzbereich zwischen den Signalen der Frequenzen x^{k} und x^{k+1} ein Leck vorliegt. Hierbei gilt für die 3 Signal-Leistungspegel Lₓ^{k}ₜ, Lₓ^{j}ₜ, Lₓ^{k+1}ₜ zu einem Zeitpunkt t die Relation Lₓ^{k}ₜ < Lₓ^{j}ₜ > Lₓ^{k+1}ₜ.

Der Signal-Leistungspegel Lₓ^{j}ₜ ist in diesem Fall größer als die Signal-Leistungspegel Lₓ^{k}ₜ und Lₓ^{k+1}ₜ. Die Abweichung des Signal-Leistungspegels Lₓ^{j}ₜ ist größer als ein vorgegebener Wert, so dass die Abweichung als Leck bewertet wird.
Auch in diesem, in Figur 2b dargestellten Fall gilt für jedes x^{j} die Relation x^{k} < x^{j} < x^{k+1} und die Signale der Frequenzen x^{k} und x^{k+1} bilden einen Abstand, der im Wesentlichen gleich der Bandbreite von Fernseh-Digitalkanälen ist, insbesondere im Wesentlichen 6, 7 oder 8 MHz, die in dem Kabel-Fernsehsystem CATV vorliegen.
In Figur 2b sind unterhalb der Frequenz x^{k} und oberhalb der Frequenz x^{k+1} jeweils ein weiteres Leck dargestellt; diese Lecks betreffen Analogkanäle, die im folgenden nicht weiter betrachtet werden.

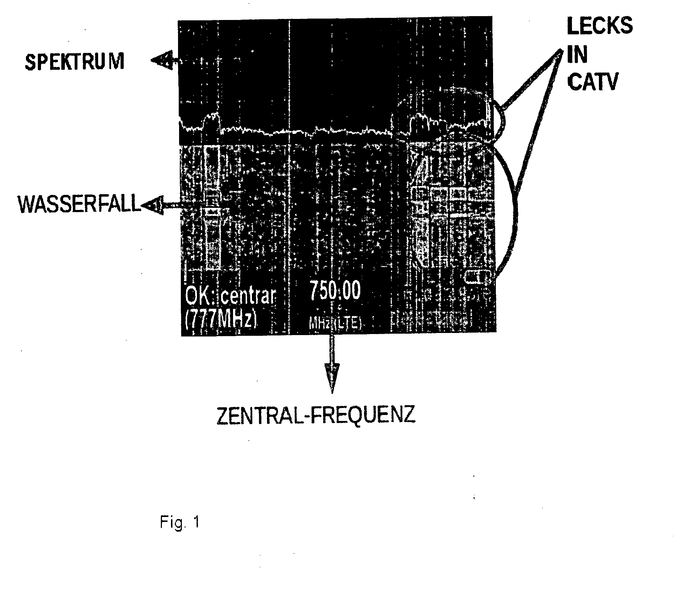

Das erfindungsgemäße Verfahren besteht aus den folgenden Schritten.
Zu Signalen eines Kabel-Fernsehsystems CATV in einem vorgegebenen Frequenzband, insbesondere im Frequenzband von 700 bis 900 MHz, , die über eine Antenne 21 empfangen werden, wird eine Menge von N (zum Beispiel 1024) Punkten gebildet, wobei
a) die ermittelte Menge von N Punkten analysiert wird und K, insbesondere 3 Punkte identifiziert werden, wobei die K Punkte Signale der Frequenzen x^{k}, x^{j}, x^{k+1} entsprechen und wobei ihre Signal-Leistungspegel Lₓ^{k}ₜ, Lₓ^{j}ₜ, Lₓ^{k+1}ₜ zu einem Zeitpunkt t die Relation Lₓ^{k}ₜ < Lₓ^{j}ₜ > Lₓ^{k+1}ₜ erfüllen,
   dabei gilt für jedes xⁱ die Relation x^{k} < x^{j} < x^{k+1} und die Signale der Frequenzen x^{k} und x^{k+1} bilden einen Abstand, der im Wesentlichen gleich der Bandbreite von Fernseh-Digitalkanälen (BWTV) ist, insbesondere im Wesentlichen 6, 7 oder 8 MHz, die in dem Kabel-Fernsehsystem CATV vorliegen, und
b) sofern K Punkte identifiziert werden, deren Signal-Leistungspegel Lₓ^{k}ₜ, Lₓ^{j}ₜ, Lₓ^{k+1}ₜ die im Schritt a) genannten Bedingungen erfüllen, wird eine optische und/oder akustische Anzeige gebildet, die ein Leck im Kabel-Fernsehsystem CATV bezeichnet. Die in Figur 1 dargestellte optische Anzeige lautet "Fuga cable detectada!" (= spanische Version für "Kabelleck erkannt!")

Eine optische und/oder akustische Anzeige enthält vorzugsweise nicht nur die Information, dass ein Leck erkannt wurde, sondern auch die (mindestens ungefähre) Frequenz x^{j}, die dem Leck im Kabel-Fernsehsystem CATV entspricht.

Weiterhin kann das erfindungsgemäße auch die folgenden Schritte aufweisen:
- den Signal-Leistungspegeln Lₓₗ werden signalleistungspegel-individuelle Farben Cₓₗ zugeordnet;
- die Signal-Leistungspegel Lₓₗ und/oder die Farben Cₓₗ der Frequenzen x^{k}, x^{j} x^{k+1} werden auf Abweichungen gegenüber nicht-leck-bezogenen Werten geprüft,
- Abweichungen vorgegebener Größe werden als Lecks bewertet,
- es wird ein Wasserfalldiagramm gebildet, das beispielsweise der in Figur 1 dargestellten Abbildung entspricht.

Wasserfalldiagramme sind Säulendiagramme, die unter anderen in der Nachrichtentechnik angewendet werden, siehe http://de.wikipedia.org/wiki/Wasserfalldiagramm. Beispielsweise werden Kurzzeit-Leistungsspektren eines Signals, aus dem sich die zeitliche Änderung der spektralen Zusammensetzung erkennen lässt, perspektivisch darstellen. So können die Kurven einer Messung versetzt hintereinander angeordnet oder in Form eines Rasterdiagramms farblich kodiert werden. Beispielsweise werden statistische Verteilungen von Messwerten über die Zeit dargestellt.

Die im Rahmen des erfindungsgemäßen Verfahrens gebildete Farbskala umfasst die Farben von rot über gelb und grün bis dunkelblau; dabei bezeichnet beispielsweise rot den höchsten am Eingang (22 in Figur 3) der Vorrichtung erkannten Signalleistungspegel und beispielsweise dunkelblau den niedrigsten erkannten Signalleistungspegel. Diese Zuordnung von Farben zu den Signalleistungspegeln kann fest vorgegeben sein beziehungsweise ist diese Zuordnung beispielsweise manuell einstellbar.

Bei der Bildung des Wasserfalldiagramms kann eine Zeile mit Daten des vorhergehenden Punktes gebildet werden, wobei Daten, die zu einem Zeitpunkt t-P hinzugefügt wurden, eliminiert werden, wobei P die maximale Anzahl der Zeilen bezeichnet, die im Wasserfalldiagramm dargestellt werden können.

Weiterhin kann im Rahmen des erfindungsgemäßen Verfahrens die Analyse auf die Frequenz, bei der das Leck besteht, fokussiert werden, womit die Bandbreite der Analyse verringert und die Spektralauflösung vergrößert wird.

### Bezugszeichen

- 2: Richtantenne
- 22: Eingangsschaltung (Signale RF)
- 23: Umsetzer (Zwischenfrequenz ZF)
- 24: Digitalprozessor für die Spektralanalyse des Eingangssignals
- 25: Zentralprozessor/Hauptprozessor
- 26: Display

## Patentansprüche

1. Verfahren zur Erkennung von Lecks in Kabel-Fernsehsystemen (CATV) in einem vorgegebenen Frequenzband, insbesondere im Frequenzband von 700 bis 900 MHz, mittels einer Vorrichtung, insbesondere einem Feldmessgerät, welche eine Richtantenne (21) aufweist, und die eine Spektralanalyse von Signalen eines Kabel-Fernsehsystems (CATV) durchführt, die von der Richtantenne (21) empfangen werden, wobei eine Menge von N Punkten des Frequenzbandes ermittelt wird,
wobei das Verfahren die folgenden Schritte aufweist:
a) Analysieren der ermittelten Menge von N, insbesondere von 1024 Punkten, und Identifizieren von K, insbesondere von 3 Punkten, die K Signalen von Frequenzen x^{k}, x^{j} x^{k+1} in der Weise entsprechen, dass ihre Signal-Leistungspegel Lₓ^{k}ₜ, Lₓ^{j}ₜ, Lₓ^{k+}ₜ zu einem Zeitpunkt t die Relation Lₓ^{k}ₜ < Lₓ^{j}ₜ > Lₓ^{k+1}ₜ erfüllen, wobei für jedes x^{j} die Relation x^{k} < x^{j} < x^{k+1} gilt und wobei die Frequenzen x^{k} und x^{k+1} einen Abstand bilden, der im Wesentlichen gleich der Bandbreite von Fernseh-Digitalkanälen ist, insbesondere im Wesentlichen 6, 7 oder 8 MHz, die in dem Kabel-Fernsehsystem (CATV) vorliegen, und
b) sofern K Punkte identifiziert werden, deren Signal-Leistungspegel Lₓ^{k}ₜ, Lₓ^{J}ₜ, Lₓ^{k+1}ₜ die im Schritt a) genannten Bedingungen erfüllen, Bilden einer optischen und/oder akustischen Anzeige, die ein Leck im Kabel-Fernsehsystem (CATV) bezeichnet.

2. Verfahren nach Anspruch 1, **dadurch gekennzeichnet**,
- dass eine optische und/oder akustische Anzeige gebildet wird, die eine Frequenz (x^{j}) bezeichnet, die dem Leck im Kabel-Fernsehsystem (CATV) entspricht.

3. Verfahren nach einem der vorstehenden Ansprüche, **dadurch gekennzeichnet**,
- dass den Signal-Leistungspegeln Lₓₗ signalleistungspegel-individuelle Farben Cₓₗ zugeordnet werden,
- dass die Signal-Leistungspegel Lₓₗ und/oder die Farben Cₓₗ der Frequenzen x^{k}, x^{j}, x^{k+1} auf Abweichungen gegenüber nicht-leck-bezogenen Werten geprüft werden,
dass Abweichungen vorgegebener Größe als Lecks bewertet werden, und
- dass die Vorrichtung ein Wasserfalldiagramm bildet.

4. Vorrichtung zur Erkennung von Lecks in Kabel-Fernsehsystemen (CATV) insbesondere Feldmessgerät,
- mit einer Richtantenne (21),
- mindestens einem Prozessor (24, 25), und
- einer optischen Anzeigeeinrichtung (26),
**dadurch gekennzeichnet, dass**
- dem Prozessor (25) ein Softwareprogramm zugeordnet ist, das das Verfahren nach einem der vorstehenden Ansprüche definiert.

5. Vorrichtung nach Anspruch 4, **dadurch gekennzeichnet**,
- dass die Vorrichtung einen ersten Prozessor (24) aufweist, der die Signal-Leistungspegel von N, insbesondere 1024 Punkten des Frequenzbandes ermittelt, und
- dass die Vorrichtung einen zweiten Prozessor (25) aufweist, der die K Punkte identifiziert und die optische Anzeigeeinrichtung (26) und/oder eine akustische Anzeigeeinrichtung zur optischen und/oder akustischen Anzeige ansteuert, die ein Leck im Kabel-Fernsehsystem (CATV) bezeichnet.

6. Vorrichtung nach Anspruch 5, **dadurch gekennzeichnet**,
- dass die optische Anzeige alphanumerische Zeichen aufweist, die ein Leck im Kabel-Fernsehsystem (CATV) bezeichnen.

7. Vorrichtung nach einem der Ansprüche 4 bis 6, **dadurch gekennzeichnet**,
- dass die Richtantenne (21) einen Antennengewinn in der Größenordnung von 18 dB aufweist.
